# EUROPEAN PATENT SPECIFICATION

(11) **EP 0 722 866 B1**
(45) Date of publication and mention of the grant of the patent: **31.03.1999**
(21) Application number: 95308265.8
(22) Date of filing: 17.11.1995
(51) Int. Cl.: B60S 1/24, B60K 20/02

(54) **Mechanical link arms**
Mechanische Gelenkstangen
Bras de connexion mécaniques

(30) Priority: 21.01.1995 GB 9501207
(43) Date of publication of application: 24.07.1996
(73) Proprietor: Automold Limited, Stroud, GL5 3QF (GB)
(72) Inventor: Smith, John Edward, Amberley, Stroud GL5 5AW (GB)
(74) Representative: Harding, Richard Patrick

(56) References cited:
- DE-A- 3 045 504
- DE-C- 3 531 858

## Description

This invention relates to mechanical link arms, and is concerned more particularly, but not exclusively, with mechanical link arms for use in automotive applications, for example for use in windscreen wiper mechanisms or gear change mechanisms.

As is well known most windscreen wiper mechanisms for automotive applications are designed to transmit motion from the rotary output shaft of a single wiper motor to two separate wiper drive shafts to impart the required reciprocating motion to the two windscreen wipers. A crank arrangement serves to convert the rotary motion to reciprocating motion which is imparted to the wiper drive shafts by a drive arm and a link arm interconnecting two link members provided on the drive shafts. The link arm, which is pivotally connected at its opposite ends to the link members and serves to transmit drive from one of the link members to the other link, is subjected to high tensile and compressive loading due to its reciprocating motion and the resistance to movement of the wipers over the windscreen, and it is therefore necessary for the link arm to have sufficient strength to withstand such loading over prolonged use whilst being of lightweight construction.

Conventionally the link arm is formed by a hollow metal tube having open ends within which plastics socket connectors are secured by crimping for the required pivotal connections to the link members. The fabrication of such a link arm requires the forming of three separate components and an additional assembly step in which the connectors are crimped within the ends of the tube. Furthermore, although the resulting assembly is both light and strong, it effectively prevents flexing of the arm in the event of mechanical overloading of the mechanism, for example due to snow or ice on the windscreen, with a result that such overloading may rapidly result in burning out of the motor.

GB 2219932A discloses a windscreen wiper link arm which is in the form of a one piece moulding of plastics material provided with moulded linkage parts at both ends. However such a link arm is of complex moulded shape and may be of insufficient strength some applications

It is an object of the invention to provide a novel mechanical link arm providing certain advantages in use over the conventional tubular metal link arm.

According to the present invention there is provided a mechanical link arm comprising a one piece moulding of plastics material provided with moulded linkage parts at both ends which serve for connection of separate mechanical components to the ends of the link arm, at least one of the linkage parts being a pivot linkage for connection to a complementary pivot linkage provided on the separate mechanical component to be connected to the corresponding end of the link arm, characterised in that the one piece moulding is in the form of a hollow tube provided with moulded linkage parts at both ends which close off the ends of the tube.

Such a link arm can be produced in one piece in a single fabrication step, and is therefore capable of being manufactured at significantly less cost than the conventional tubular metal link arm. Furthermore the link arm can be fabricated from a suitable plastics material so as to be both strong and light, and in addition so as to permit some flexing of the arm in the event of a mechanical overload so that such a mechanical overload will be less likely to cause burning out of the wiper motor, and is therefore more robust than the windscreen wiper link arm of GB 2219932A.

Preferably the tube is integrally formed with pivot linkages at both ends which close off both ends and which serve for connection of separate mechanical components to both ends of the link arm.

The or each pivot linkage on the tube is preferably in the form of a socket connector for connection to a complementary ball connector provided on the or each separate mechanical component, or in the form of any other type of connector permitting freedom of rotary or linear movement between the link arm and the or each separate mechanical component to which it is connected. Alternatively the or each pivot linkage on the tube may be in the form of a ball connector or yoke or any other form of connector permitting freedom of rotary or linear movement between the link arm and the or each separate mechanical component to which it is connected. Furthermore, where pivot linkages are provided on both ends of the link arm, the two pivot linkages may be of different types.

Conveniently the link arm is formed from a thermoplastic polymer, such as a polyamide, polyester, polyacetal, polycarbonate, polyphenylene sulphide or polyetheramide, by a moulding process, such as gas injection moulding. Furthermore the thermoplastic polymer may incorporate a reinforcement medium, such as glass fibres, glass beads or minerals.

The invention also provides a mechanical link arm for interconnecting two rotary windscreen wiper shafts comprising an elongate plastics member formed by a one piece moulding provided with integral pivot linkages at its ends which serve for connection to link members on the wiper shafts, characterised in that the one piece moulding is in the form of a hollow tube provided with moulded linkage parts which close off the ends of the tube.

The elongate member is preferably of circular cylindrical form, although it may alternatively have a generally square or elliptical cross-section, and may optionally include external ribs. Either the inside or the outside profile of the elongate member may depart somewhat from a perfect cylindrical form, for example so as to be barrelled inform.

The invention further provides a method of forming a mechanical link arm comprising introducing a quantity of plastics material into a mould in order to form a one piece moulding of plastics material provided with integral linkage parts at both ends which serve for connection of separate mechanical components to the ends of the link arm, at least one of the linkage parts being a pivot linkage for connection to a complementary pivot linkage provided on the separate mechanical component to be connected to the corresponding end of the link arm, characterised in that the method includes injecting a gas into the mould so as to cause the plastics material to be distributed within the mould to produce said one piece moulding in the form of a hollow tube provided with moulded linkage parts which close off the ends of the tube.

In order that the invention may be more fully understood, two mechanical link arms in accordance with the invention will now be described, by way of example, with reference to the accompanying drawings, in which:
Figure 1 is a perspective view of a first link arm which is broken away at one end in order to show its hollow structure;
Figures 2 and 3 show a windscreen wiper mechanism incorporating the first link arm, respectively from the side and from above; and
Figure 4 is a perspective view of a second link arm, again shown partially broken away, coupling a gear shift housing to a gear box assembly.

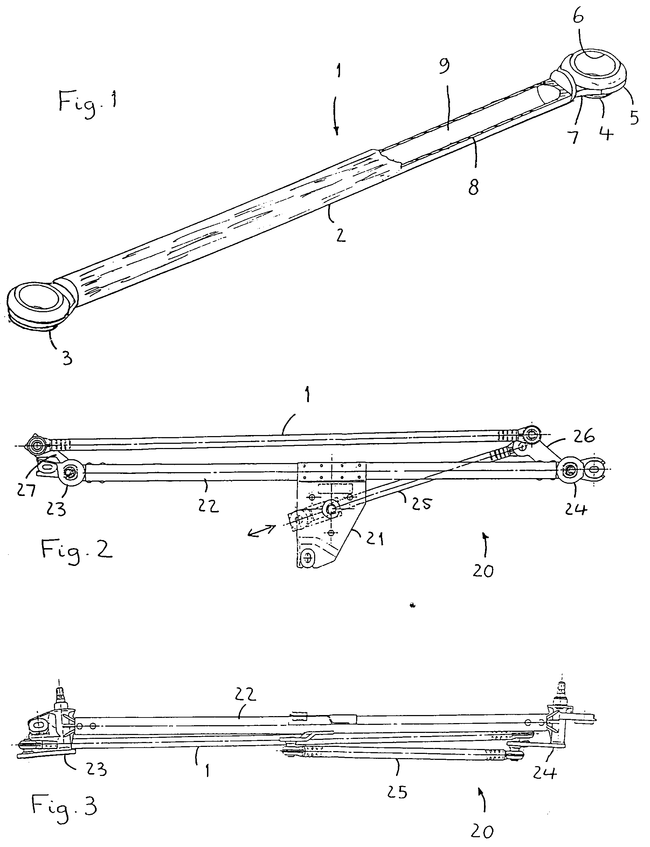

The windscreen wiper link arm 1 shown in Figure 1 is manufactured as a one-piece moulding from a plastics material by use of a standard or suitably adapted injection moulding machine and with injection of gas into the mould to provide the required hollow structure. The link arm 1 so produced is in the form of a hollow tube 2 of plastics material integrally formed at its ends with socket connectors 3 and 4 which close off the ends of the tube 2 and are provided for connection to complementary ball connectors provided on link members of the windscreen wiper mechanism which will be described in more detail below with reference to Figures 2 and 3. Each socket connector 3 or 4 has a body 5 of generally circular form formed with a circular recess 6 for receiving the ball of the ball connector, and a flattened connecting portion 7 interconnecting the body 5 and the tube 2 which, for strengthening purposes, may be formed with a lower rib (not shown).

In the gas injection moulding process used for fabricating the link arm 1, a suitable thermoplastic polymer moulding material (optionally incorporating a glass fibre, bead or mineral reinforcement medium) is introduced in molten form into the mould from the injection moulding machine nozzle by way of a suitably designed cold or hot runner feed system. The feed point may be at any suitable position over the entire surface of the link arm 1 or associated connector 3 or 4, and may be by way of any suitable nozzle. For example the material may be injected through a nozzle at a central point along the length of the mould. Gas is then injected under pressure into the mould, either through the same nozzle or through one or more special gas injection needles, so as to cause the moulding material to enter the ends of the mould to form the socket connectors 3 and 4 and to line the internal walls of the mould to form the tube 2 having a wall 8 of circular cross-section and substantially constant wall thickness surrounding a hollow space 9 within the tube 2. Alternatively mould insert assemblies may be located within the runner system or cavity wall where moulding material concentrations are required.

Although the described link arm 1 is of circular cross-section, it should be understood that alternative forms of link arm in accordance with the invention may be of box section or elliptical cross-section, or even of U-shaped cross-section.

Figures 2 and 3 show a windscreen wiper assembly 20 incorporating such a link arm 1, respectively from the side and from above. The mechanism 20 comprises a wiper motor mounting plate 21 connected to a fixed support 22 at the opposite ends of which are mounted two wiper drive shaft assemblies 23 and 24. Reciprocating drive is imparted by the wiper motor (not shown) to a drive arm 25 which is pivotally connected to a link member 26 mounted on the drive shaft of the drive shaft assembly 24. The link arm 1 is pivotally connected at its ends to the link member 26 and a corresponding link member 27 mounted on the drive shaft of the drive shaft assembly 23. It will be appreciated that the reciprocating motion of the drive shaft 25 applied to the link arm 26 causes the required reciprocal pivoting movement about a limited arc of the windscreen wiper connected to the drive shaft assembly 24, and correspondingly motion transmitted from the link member 26 to the link member 27 by way of the link arm 1 causes corresponding movement of the windscreen wiper connected to the drive shaft assembly 23.

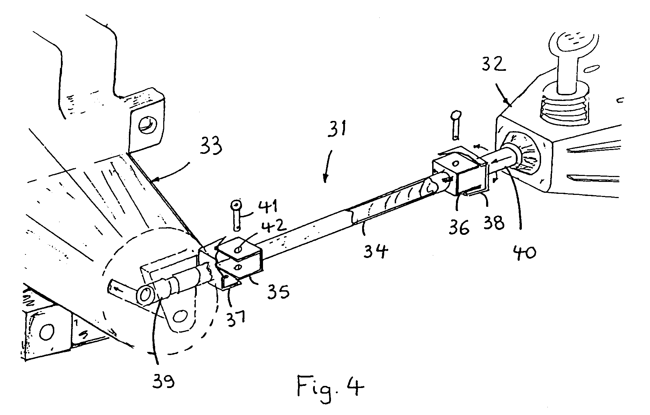

Figure 4 shows a link arm 31 in use for coupling a gear shift housing 32 to a gear box assembly 33. As in the case of the windscreen wiper link arm 1, the link arm 31 is manufactured as a one-piece moulding from a plastics material by use of a standard or suitably adapted injection moulding machine and with injection of gas into the mould to provide the required hollow structure. Furthermore the link arm 31 so produced is in the form of a hollow tube 34 of plastics material integrally formed at its end with yoke pieces 35 and 36 which close off the ends of the tube 34 and are provided for connection to complementary yoke pieces 37 and 38 mounted on shafts 39 and 40 extending into the gear box assembly 33 and the gear shift housing 32 respectively. It will be appreciated that the yoke pieces 37 and 38 are shown broken away in order to render the yoke pieces 35 and 36 more easily visible. The yoke pieces 35 and 37 and the yoke pieces 36 and 38 are in each case coupled together by a pin 41 extending through apertures 42 in the yoke pieces.

Similar link arms or link arms of somewhat modified construction may be used in other automotive applications or in applications outside the automotive field, such as for a window stay.

## Claims

1. A mechanical link arm comprising a one piece moulding of plastics material provided with moulded linkage parts (3, 4) at both ends which serve for connection of separate mechanical components to the ends of the link arm (1), at least one of the linkage parts (3, 4) being a pivot linkage for connection to a complementary pivot linkage provided on the separate mechanical component to be connected to the corresponding end of the link arm (1), characterised in that the one piece moulding is in the form of a hollow tube (2) provided with moulded linkage parts (3, 4) at both ends which close off the ends of the tube (2).

2. A link arm according to claim 1, wherein the tube (2) is integrally formed with pivot linkages (3, 4) at both ends for connection to complementary pivot linkages provided on the separate mechanical components to be connected to both ends of the link arm (1).

3. A link arm according to claim 1 or 2, wherein said at least one said pivot linkage (3, 4) on the tube (2) is in the form of a socket connector for connection to a complementary ball connector provided on the or each separate mechanical component.

4. A link arm according to any preceding claim, wherein the link arm (1) is formed by moulding from a thermoplastic polymer.

5. A link arm according to claim 4, wherein the thermoplastic polymer is a polyamide, polyester, polyacetal polycarbonate, polyphenylene sulphide or polyetheramide.

6. A link arm according to any preceding claim, which is formed by an injection moulding process in conjunction with gas injection.

7. A mechanical link arm for interconnecting two rotary windscreen wiper shafts comprising an elongate plastics member (2) formed by a one piece moulding provided with integral pivot linkages (3, 4) at its ends which serve for connection to link members on the wiper shafts, characterised in that the one piece moulding is in the form of a hollow tube (2) provided with moulded linkage parts (3, 4) which close off the ends of the tube (2).

8. A method of forming a mechanical link arm comprising introducing a quantity of plastics material into a mould in order to form a one piece moulding of plastics material provided with integral linkage parts (3, 4) at both ends which serve for connection of separate mechanical components to the ends of the link arm (1), at least one of the linkage parts (3, 4) being a pivot linkage for connection to a complementary pivot linkage provided on the separate mechanical component to be connected to the corresponding end of the link arm (1), characterised in that the method includes injecting a gas into the mould so as to cause the plastics material to be distributed within the mould to produce said one piece moulding in the form of a hollow tube (2) provided with moulded linkage parts (3, 4) which close off the ends of the tube (2).

## Patentansprüche

1. Mechanischer Gelenkarm, der ein aus einem Stück bestehendes Formteil aus Plastikmaterial umfaßt, das an beiden Enden mit geformten Verbindungsteilen (3, 4) versehen ist, die der Verbindung von gesonderten mechanischen Komponenten mit den Enden des Gelenkarmes (1) dienen, wobei wenigstens eines der Verbindungsteile (3, 4) eine Drehverbindung zur Verbindung mit einer komplementären Drehverbindung ist, die an der gesonderten mechanischen Komponente bereitgestellt wird, die mit dem entsprechenden Ende des Gelenkarmes (1) zu verbinden ist, dadurch gekennzeichnet, daß das aus einem Stück bestehende Formteil die Form eines Hohlrohres (2) hat, das an beiden Enden mit geformten Verbindungsteilen (3, 4) versehen ist, welche die Enden des Rohres (2) verschließen.

2. Gelenkarm nach Anspruch 1, bei dem das Rohr (2) an beiden Enden integral mit Drehverbindungen (3, 4) zur Verbindung mit komplementären Drehverbindungen gebildet wird, die an den gesonderten mechanischen Komponenten bereitgestellt werden, die mit den beiden Enden des Gelenkarmes (1) zu verbinden sind.

3. Gelenkarm nach Anspruch 1 oder 2, bei dem die wenigstens eine Drehverbindung (3, 4) am Rohr (2) die Form eines Buchsenverbinders zur Verbindung mit einem komplementären Kugelverbinder hat, der an der oder jeder der gesonderten mechanischen Komponenten bereitgestellt wird.

4. Gelenkarm nach einem der vorhergehenden Ansprüche, bei dem der Gelenkarm (1) durch Formung aus einem thermoplastischen Polymer hergestellt wird.

5. Gelenkarm nach Anspruch 4, bei dem das thermoplastische Polymer ein Polyamid, Polyester, Polyacetalpolycarbonat, Polyphenylensulfid oder Polyetheramid ist.

6. Gelenkarm nach einem der vorhergehenden Ansprüche, der in einem Spritzgußverfahren in Verbindung mit Gasinjektion hergestellt wird.

7. Mechanischer Gelenkarm zur Verbindung von zwei rotierenden Scheibenwischerwellen miteinander, der ein längliches Plastikelement (2) umfaßt, das aus einem aus einem Stück bestehenden Formteil gebildet, das an seinen Enden mit integralen Drehverbindungen (3, 4) versehen ist, die der Verbindung mit Gelenkelementen an den Scheibenwischerwellen dienen, dadurch gekennzeichnet, daß das aus einem Stück bestehende Formteil die Form eines Hohlrohres (2) hat, das mit geformten Verbindungsteilen (3, 4) versehen ist, welche die Enden des Rohres (2) verschließen.

8. Verfahren zur Schaffung eines mechanischen Gelenkarmes, das die Einführung einer Menge an Plastikmaterial in eine Form umfaßt, um ein aus einem Stück bestehendes Formteil aus Plastikmaterial zu bilden, das an beiden Enden mit integralen Verbindungsteilen (3, 4) versehen ist, die der Verbindung von gesonderten mechanischen Komponenten mit den Enden des Gelenkarmes (1) dienen, wobei wenigstens eines der Verbindungsteile (3, 4) eine Drehverbindung zur Verbindung mit einer komplementären Drehverbindung ist, die an der gesonderten mechanischen Komponente bereitgestellt wird, die mit dem entsprechenden Ende des Gelenkarmes (1) zu verbinden ist, dadurch gekennzeichnet, daß das Verfahren die Injektion eines Gases in die Form einschließt, derartig, daß die Verteilung des Plastikmaterials innerhalb der Form bewirkt wird, um das aus einem Stück bestehende Formteil in Form eines Hohlrohres (2) herzustellen, das mit geformten Verbindungsteilen (3, 4) versehen ist, welche die Enden des Rohres (2) verschließen.

## Revendications

1. Bras de liaison mécanique comprenant un moulage en une pièce de matière plastique comportant des éléments de liaison moulés (3,4) au niveau des deux extrémités, servant à la connexion de composants mécaniques séparés aux extrémités du bras de liaison (1), au moins un des éléments de liaison (3,4) étant une liaison pivotante destinée à être connectée à une liaison pivotante complémentaire agencée sur le composant mécanique séparé, devant être connecté à l'extrémité correspondante du bras de liaison (1), caractérisé en ce que le moulage en une pièce a la forme d'un tube creux (2), comportant des éléments de liaison moulés (3, 4) au niveau des deux extrémités, fermant les extrémités du tube (2).

2. Bras de liaison selon la revendication 1, dans lequel le tube (2) comporte des liaisons pivotantes (3, 4) qui en font partie intégrante au niveau des deux extrémités, destinées a être connectées à des liaisons pivotantes complémentaires agencées sur les composants mécaniques séparés devant être connectés aux deux extrémités du bras de liaison (1).

3. Bras de liaison selon les revendications 1 ou 2, dans lequel ladite au moins une liaison pivotante (3, 4) sur le tube (2) a la forme d'un connecteur à douille destiné à être connecté à un connecteur sphérique complémentaire agencé sur le ou chaque composant mécanique séparé.

4. Bras de liaison selon l'une quelconque des revendications précédentes, dans lequel le bras de liaison (1) est formé par moulage d'un polymère thermoplastique.

5. Bras de liaison selon la revendication 4, dans lequel le polymère thermoplastique est un polyamide, un polyester, un polycarbonate de polyacétal, un polysulfure de phénylène ou un polythéramide.

6. Bras de liaison selon l'une quelconque des revendications précédentes, formé par un procédé de moulage par injection en combinaison avec une injection de gaz.

7. Bras de liaison mécanique pour interconnecter deux arbres rotatifs d'essuie-glace comprenant un élément plastique allongé (2), formé par un moulage en une pièce comportant des liaisons pivotantes qui en font partie intégrante (3,4) au niveau de ses extrémités, en vue de la connexion aux éléments de liaison sur les arbres d'essuie-glace, caractérisé en ce que le moulage en une pièce a la forme d'un tube creux (2), comportant des éléments de liaison moulés (3, 4), fermant les extrémités du tube (2).

8. Procédé de production d'un bras de liaison mécanique comprenant l'introduction d'une certaine quantité de matériau plastique dans un moule pour former un moulage en une pièce de matériau plastique, comportant des éléments de liaison (3, 4) qui en font partie intégrante au niveau des deux extrémités, destinés à connecter des composants mécaniques séparés aux extrémités du bras de liaison (1), au moins un des éléments de liaison (3, 4) étant une liaison pivotante destinée à être connectée à une liaison pivotante complémentaire agencée sur le composant mécanique séparé devant être connecté à l'extrémité correspondante du bras de liaison (1), caractérisé en ce que le procédé englobe l'injection d'un gaz dans le moule pour entraîner la répartition du matériau plastique dans le moule, pour produire un moulage en une pièce en forme de tube creux (2), comportant des éléments de liaison moulés (3, 4), fermant les extrémités du tube.
